# EUROPEAN PATENT APPLICATION

(11) **EP 2 728 679 A1**
(43) Date of publication of application: **07.05.2014**
(21) Application number: 12804823.8
(22) Date of filing: 29.06.2012
(51) Int. Cl.: H01R 13/6592, H02G 1/14

(54) **TERMINAL STRUCTURE OF BRAIDED WIRE, AND TERMINAL TREATMENT METHOD FOR BRAIDED WIRE**

(30) Priority: 30.06.2011 JP 2011145792
(71) Applicant: Fujikura Ltd., Tokyo 135-8512 (JP)
(72) Inventor: ISHIKAWA, Kohki, Sakura-shi Chiba 285-8550 (JP); NOGUCHI, Takamitsu, Tokyo 135-8512 (JP); ISHIKAWA, Shigeru, Tokyo 135-8512 (JP)
(74) Representative: Ter Meer Steinmeister & Partner
(86) International application number: PCT/JP2012/066699
(87) International publication number: WO 2013/002370

(57) **Abstract**

In a terminal structure of a braided wire, in which a terminal of the braided wire (42) is interposed between an inner ferrule (26) and an outer ferrule (25) and the outer ferrule (25) is caulked inwardly, the inner ferrule (26) includes at least one first groove (264) along an axial direction of the inner ferrule (26) and the outer ferrule (25) is recessed along the first groove (264) of the inner ferrule (26).

## Description

### TECHNICAL FIELD

The present invention relates to a terminal structure of a braided wire in which a terminal of the braided wire is interposed between an inner circular body and an outer circular body and the outer circular body is caulked inwardly, and a terminal processing method for the braided wire.

For designated countries in which incorporation by reference to documents is recognized, the contents described in Japanese Patent Application No. 2011-145792 filed on June 30, 2011 in Japan are incorporated as a part herein by reference.

### BACKGROUND ART

An art is known in which an end of a shield shell is covered with a braided tube, and an outer circumference of a portion which is overlaid with the shield shell in the braided tube is caulked with a ring member (for example, refer to Patent Literature 1).

### CITATION LIST

### PATENT LITERATURE

Patent Literature 1: JP 2007-103177 A

### DISCLOSURE OF THE INVENTION

### PROBLEM TO BE SOLVED BY THE INVENTION

In the above-mentioned art, since all of the shield shell, the braided tube and the ring member have simple cylindrical shape, when the ring member is caulked, the ring member have a surplus length. An outer circumference of the ring member partially protrudes due to the surplus length, so there is a problem in that it is impossible to sufficiently reduce a size of the terminal structure of the braided wire.

An object to be achieved by the invention is to provide a terminal structure of a braided wire which is capable of reducing a size and a terminal processing method of a braided wire which is capable of reducing the terminal structure of the braided wire.

### MEANS FOR SOLVING PROBLEM

[1] A terminal structure of a braided wire according to of the present invention is a terminal structure of a braided wire in which a terminal of the braided wire is interposed between an inner circular body and an outer circular body and the outer circular body is caulked inwardly, the terminal structure characterized in that the inner circular body includes at least one first groove along an axial direction of the inner circular body, and the outer circular body is recessed along the first groove of the inner circular body.
[2] In the above invention, the inner circular body may include a second groove along a circumferential direction of the inner circular body, and the outer circular body may be recessed along the second groove of the inner circular body.
[3] In the above invention, the inner circular body may have a protruded portion disposed between a plurality of the first grooves.
[4] A terminal processing method for a braided wire according to the present invention is a terminal processing method for a braided wire characterized by comprising: a first step of interposing a terminal of the braided wire between an inner circular body and an outer circular body; and a second step of caulking the outer circular body inwardly, wherein the inner circular body includes at least one first groove along an axial direction of the inner circular body, and the second step includes recessing the outer circular body along the first groove of the inner circular body.
[5] In the above invention, the inner circular body may include a second groove along a circumferential direction of the inner circular body, and the second step may include recessing the outer circular body along the second groove of the inner circular body.
[6] In the above invention, the inner circular body may have a protruded portion disposed between a plurality of the first grooves, and the second step may include causing the protruded portion to bring into contact with the braided wire.

### EFFECT OF THE INVENTION

According to the invention, the outer circular body is recessed along the first groove of the inner circular body so that a size of the terminal structure of the braided wire may be reduced.

### BRIEF DESCRIPTION OF DRAWING

Fig. 1(a) is a front view of a connector in an embodiment of the invention, Fig. 1(b) is a plan view of a connector in an embodiment of the invention, and Fig. 1(c) is a side view of a connector in an embodiment of the invention;
Fig. 2 is an exploded perspective view of a connector in an embodiment of the invention;
Fig. 3 is an enlarged cross-sectional view of a portion III of Fig. 1(c);
Fig. 4 is a perspective view illustrating an inner ferrule in an embodiment of the invention;
Fig. 5(a) is a front view of an inner ferrule in an embodiment of the invention, Fig. 5(b) is a plan view of an inner ferrule in an embodiment of the invention, and Fig. 5(c) is a side view of an inner ferrule in an embodiment of the invention;
Figs. 6(a) to 6(g) are diagrams illustrating the sequence of assembly of a connector in an embodiment of the invention;
Fig. 7(a) is a cross-sectional view illustrating a terminal structure of a braided wire before being caulked in an embodiment of the invention and Fig. 7(b) is a cross-sectional view illustrating a terminal structure of a braided wire after being caulked in an embodiment of the invention; and
Fig. 8(a) is a plan view illustrating a terminal structure of a braided wire in another embodiment of the invention and Fig. 8(b) is a cross-sectional view taken along line VIIIB-VIIIB of Fig. 8(a).

### BEST MODE(S) FOR CARRYING OUT THE INVENTION

Hereinafter, embodiments of the invention will be described with reference to the drawings.

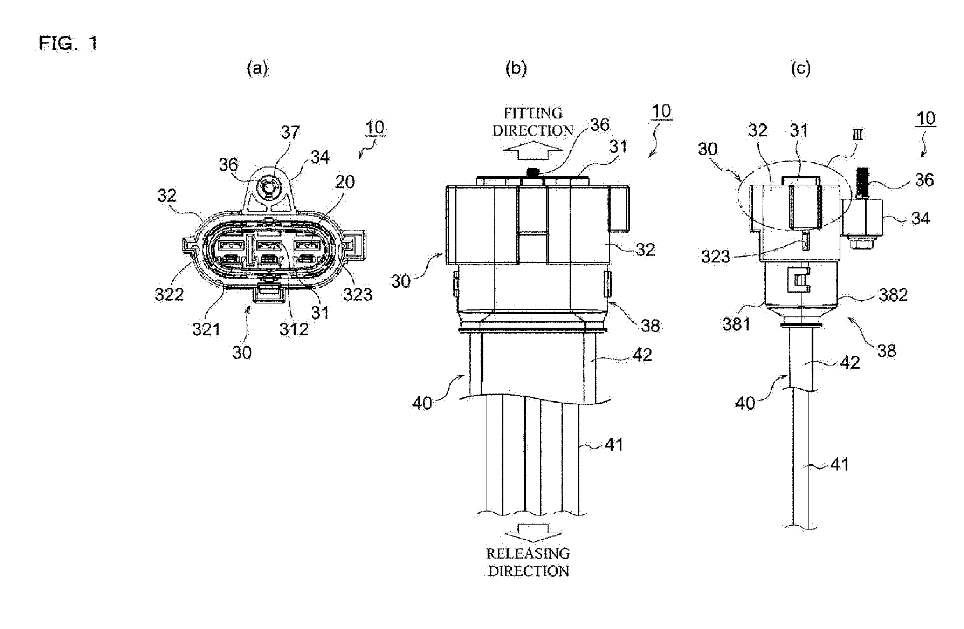

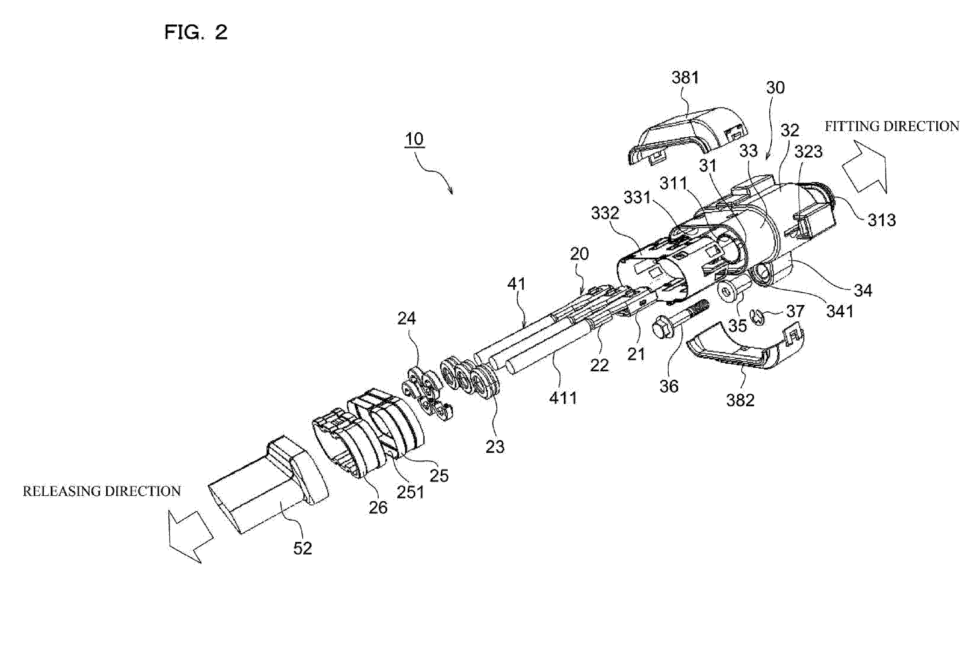

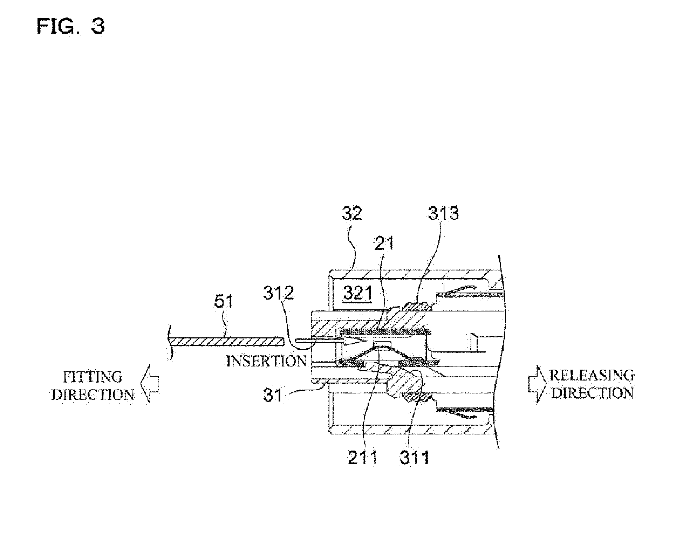

Figs. 1(a) to 1(c) are diagrams illustrating a connector in this embodiment, Fig. 2 is an exploded perspective view of a connector in this embodiment, Fig. 3 is an enlarged cross-sectional view of a portion III of Fig. 1(c), and Fig. 4 and Figs. 5(a) to 5(c) are diagrams illustrating an inner ferrule in this embodiment.

A connector 10 in this embodiment is a connector of electric power cables which transfer large-volume electric power between an electric motor and an inverter in a vehicle including the electric motor as a driving source, such as a electric vehicle (EV) or a hybrid electric vehicle (HEV).

Specifically, the connector 10 is a female connector which is attached to an end of an AC electric power cable 40 that is electrically connected to the inverter. Note that the AC electric power cable 40 in this embodiment comprises three electric wires 41 for three-phase AC power (U, V, and W phases) and a braided wire 42 enclosing the three electric wires 41.

Note that the above-described connector 10 may be configured as a male connector instead of the female connector or may be used as a connector of an electric power cable that connects the inverter and a battery.

Hereinafter, a direction for fitting the connector will be referred to as a "fitting direction" and a direction for separating the connector will be referred to as a "releasing direction".

As illustrated in Figs. 1(a) to 1(c) and Fig. 2, the connector 10 includes three terminals 20 and a housing 30.

The terminals 20 are female terminals that are made from copper or a copper alloy and, as illustrated in Fig. 2, include a substantially box-shaped housing portion 21 at a front end side thereof and a barrel portion 22 at the rear end thereof.

As illustrated in Fig. 3, a plate spring 211 bent in an arch shape is disposed inside the housing portion 21 of the terminal 20. A male terminal 51 of another male connector can be inserted into this housing portion 21, and the male terminal 51 inserted into the inside of the housing portion 21 is pressed to an inner wall face of the box-shaped housing portion 21 by the plate spring 211. Accordingly, the male terminal 51 is inserted into the inside of the housing portion 21 while being pressed by the plate spring 211. In accordance with the pressing, wiping is performed for the male terminal 51 and the housing portion 21 with each other, and the female terminal 20 and the male terminal 51 are electrically connected to each other.

As illustrated in Fig. 2, a center conductor of the electric wire 41 of the electric power cable 40 is crimped to the barrel portion 22 of the female terminal 20. Note that, while this electric wire 41 includes an insulating layer 411 covering an outer circumference of the center conductor, the insulating layer 411 is peeled off and the center conductor is exposed at the end that is crimped with the barrel portion 32.

This electric wire 41 is respectively inserted into a circular wire seal 23. Further, a strain reef 24 is attached to the electric wire 41 near the wire seal 23, and the detachment of the wire seal 23 is prevented. Note that, for example, the wire seal 23 is made from silicone rubber. Further, the strain reef 24, for example, is made from polybutylene terephthalate (PBT).

The housing 30, as illustrated in Figs. 1(a) to 1(c) and Fig. 2, includes a housing portion 31, a cylinder portion 32, an outer wall portion 33, and a convex portion 34 and, for example, is integrally made from a material having electric insulation such as a resin material.

In the housing portion 31, three housing holes 311 each housing the terminals 20 are formed to be substantially parallel to each other. Each housing hole 311 is open on the releasing-direction side, and the terminal 20 is inserted into the inside of the housing hole 311 from the housing portion 21 side through an opening portion. The wire seal 23 is pressed into the housing hole 311 together with the terminal 20, and the wire seal 23 seals between the terminal 20 and the housing 30.

As illustrated in Fig. 3, an exposing hole 312 is formed at the bottom of the housing hole 311, and the male terminal 51 can approach the terminal 20 housed inside the housing hole 311 through the exposing hole 312.

This housing portion 31 protrudes to the inside of the cylinder portion 32, and a fitting groove 321 is formed between the housing portion 31 and the cylinder portion 32. A housing (not illustrated) of the male connector is inserted into the fitting groove 321 and the housing portion 31 is inserted into the housing of the male connector so that the female connector 10 and the male connector are fitted together.

Further, in the fitting groove 321, a circular housing seal 313 is installed to the outer circumference of the housing portion 31. This housing seal 313, for example, is made from silicone rubber and seals a portion between the housing portion 31 and the housing of the male connector at the time of fitting.

The cylinder portion 32, as illustrated in Fig. 1(a), is a substantially flattened cylindrical body, and guide grooves 322 and 323 are formed along the fitting direction at both ends of the cylinder portion 32 in the longitudinal direction,. By inserting guide ribs (not illustrated) of the male connector into the guide grooves 322 and 323, the female connector 10 is precisely positioned with respect to the male connector.

The outer wall portion 33, as illustrated in Fig. 2, surrounds the periphery of the housing portion 31 on the releasing-direction side. A substantially flattened cylindrical shield plate 332 is inserted in an insertion space 331 formed between the outer wall portion 33 and the housing portion 31,. This shield plate 332, for example, is made from copper or a copper alloy and electromagnetically shields the terminal 20 inside the housing 30.

Further, the terminal of the braided wire 42 to which two ferrules 25 and 26 are crimped is inserted in this insertion space 331, and the shield plate 332 and the braided wire 42 are electrically connected to each other through the ferrule 25. Then, in the state in which the braided wire 42, the ferrules 25 and 26, and the shield plate 332 are inserted into the insertion space 331, the outer wall portion 33 is covered with a rear cover 38 that is configured by an upper cover 381 and a lower cover 382.

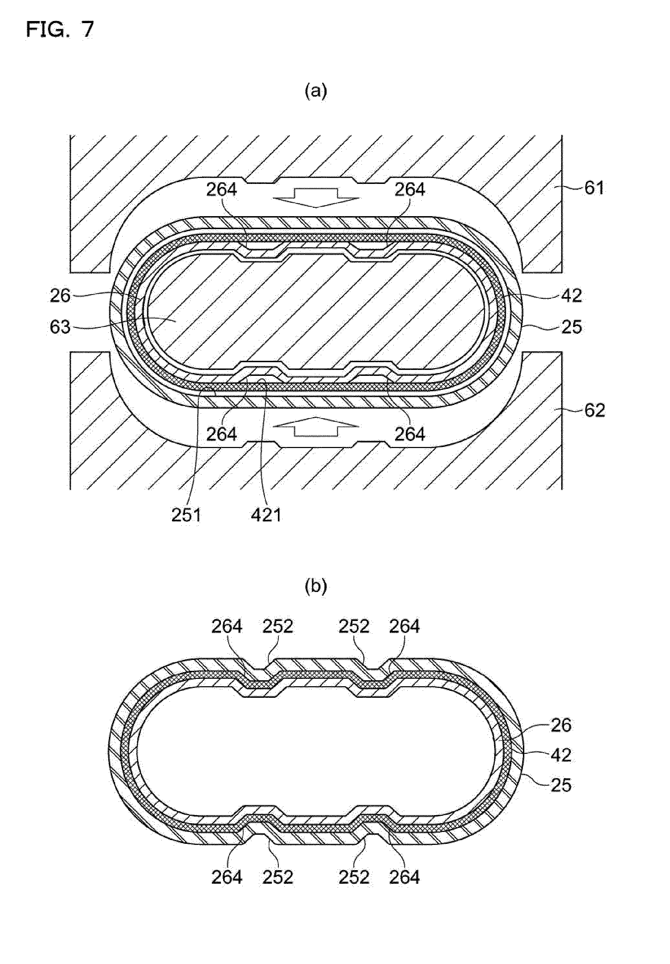

As illustrated in Fig. 2, both the outer ferrule 25 and the inner ferrule 26 have a flattened cylindrical shape. The outer ferrule 25 has an inner hole 251 having a size into which the terminal of the braided wire 42 can be inserted. In contrast, the inner ferrule 26 has an outer diameter which can be inserted into an inner hole 421 (see Fig. 7(a)) of the braided wire 42.

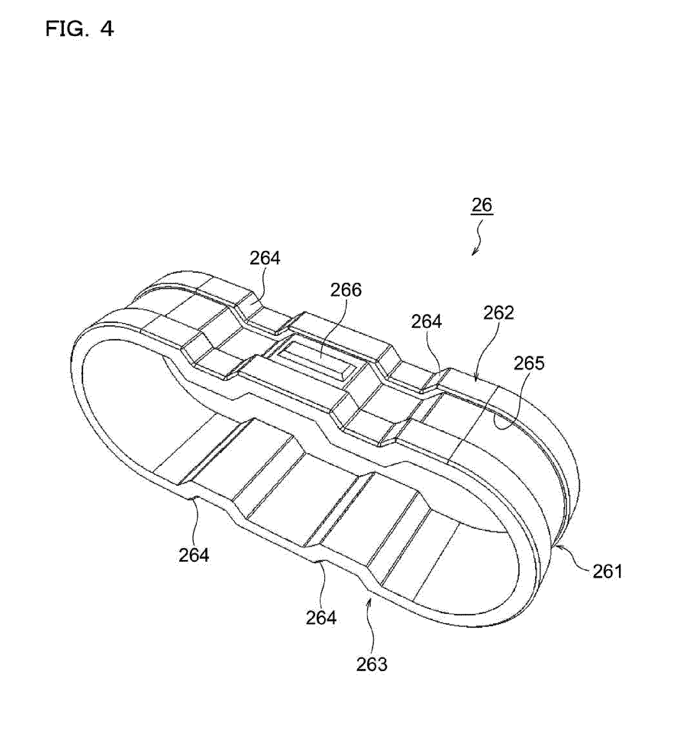

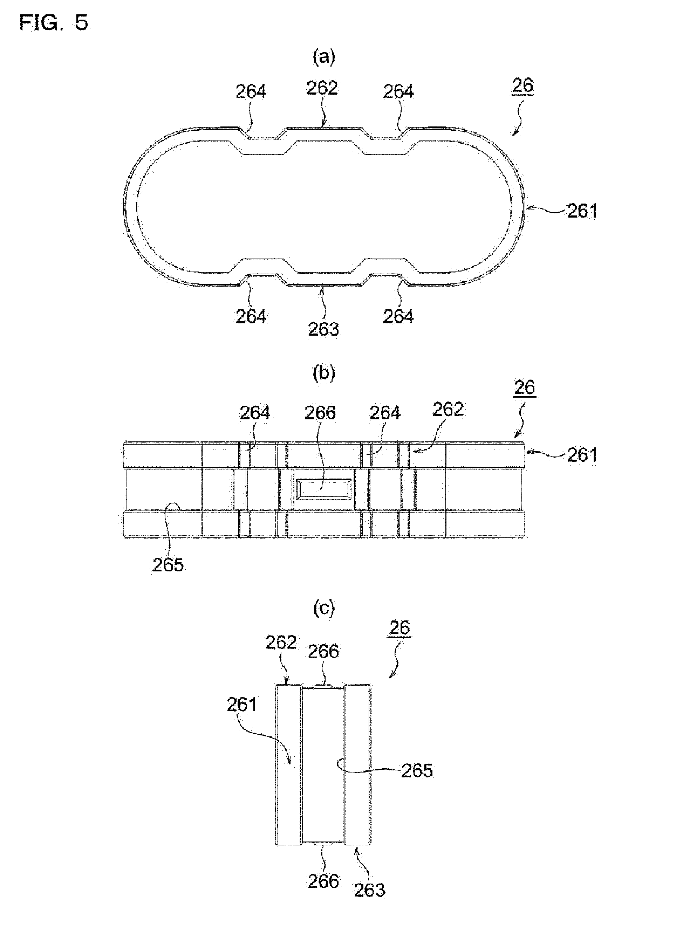

In this embodiment, as illustrated in Fig. 4 and Figs. 5(a) to 5(c), two concave-shaped first grooves 264 are formed along an axial direction of the inner ferrule 26 on a wide top surface 262 of the inner ferrule 26. Similarly, two concave-shaped first grooves 264 are also formed along the axial direction of the inner ferrule 26 on a wide bottom surface 263 of the inner ferrule 26.

Note that the number or a formation position of first grooves 264 is not specifically limited. For example, one to three first grooves 264 may be formed in the inner ferrule 26, or five or more first grooves 264 may be formed.

Incidentally, although the outer ferrule 25 is caulked in a state in which the terminal of the braided wire 42 is interposed between the ferrules 25 and 26, the groove 264 is not formed in the outer ferrule 25 before being caulked (see Fig. 7(a)). In the meantime, the outer ferrule 25 after being caulked is recessed so as to follow the first groove 264 of the inner ferrule 26 (see Fig. 7(b)).

A second concave-shaped groove 265 which is along a circumferential direction of the inner ferrule 26 is formed on the entire outer circumference surface 261 of the inner ferrule 26 in this embodiment. In the meantime, in accordance with the caulking, the outer ferrule 25 is recessed so as to follow the second groove 265 of the inter ferrule 26.

Note that a plurality of second grooves 265 may be formed in the inner ferrule 26 and the number of the second grooves 265 is not specifically limited.

Further, convex-shaped protruded portions 266 are respectively formed on the top surface 262 and the bottom surface 263 of the inner ferrule 26. Both protruded portions 266 are disposed between the two first grooves 264 and in the second groove 265. As illustrated in Fig. 5(c), the top surface of the protruded portion 266 has the same height as a portion where the first groove 264 and the second groove 265 is not formed in the outer circumference surface 261 of the inner ferrule 26.

Returning to Figs. 1(a) to 1(c) and Fig. 2, the convex portion 34 of the housing 30 protrudes from the cylinder portion 32 in a radial direction, and a through hole 341 that passes through the convex portion 34 in the fitting direction is formed. A collar 35, for example, made from steel is inserted into the through hole 341, and a bolt 36 is further inserted into the collar 35. The bolt 36 is prevented from detaching by an E ring 37 on the face of the convex portion 34 that is located at the fitting direction side and is held to be rotatable by the housing 30. The bolt 36 is screwed into a female screw portion (not illustrated) of the male connector so that the female connector 10 and the male connector are fitted together.

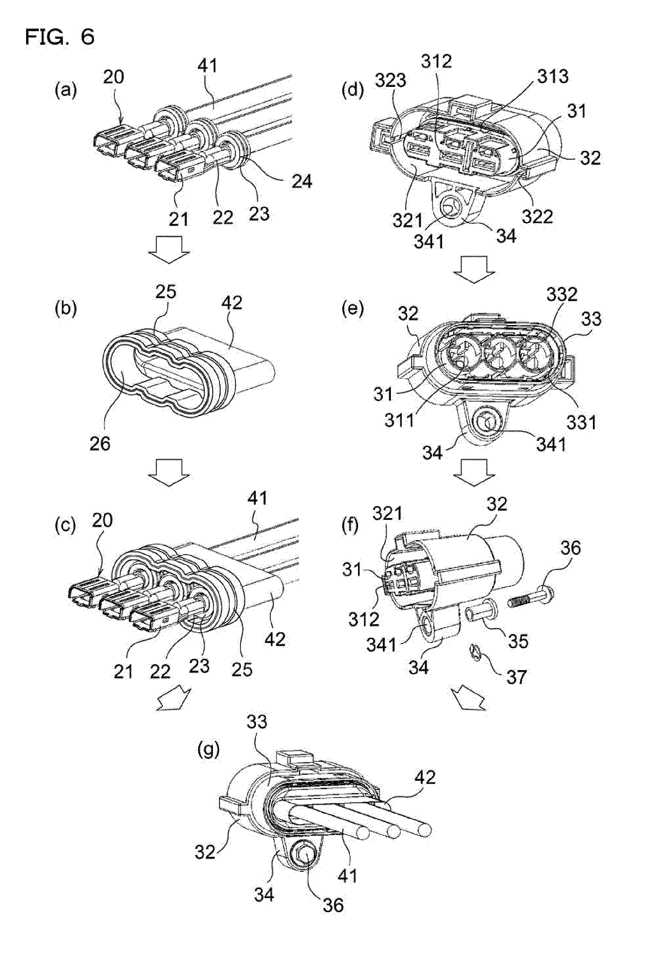

Hereinafter, the sequence of assembly of the connector 10 will be described with reference to Figs. 6(a) to 6(g), and Figs. 7(a) and 7(b).

Figs. 6(a) to 6(g) are diagrams illustrating the sequence of assembly of the connector in this embodiment, and Figs. 7(a) and 7(b) are cross-sectional views illustrating the terminal structure of the braided wire before and after being caulked in this embodiment.

First, as illustrated in Fig. 6(a), the electric wire 41 is inserted into the wire seal 23 and the strain reef 24 is installed to the electric wire 41. Subsequently, the center conductor exposed from the insulating layer 411 in the end of the electric wire 41 is positioned in the barrel portion 22 of the terminal 20 and the barrel portion 22 is caulked so that the center conductor and the barrel portion 22 are crimped.

In the meantime, as illustrated in Fig. 6(b), in a state in which the terminal of the braided wire 42 is interposed between the outer ferrule 25 and the inner ferrule 26, the outer ferrule 25 is caulked to crimp the inner ferrule 26, the braided wire 42, and the outer ferrule 25.

Specifically, first, as illustrated in Fig. 7(a), the terminal of the braided wire 42 is inserted into the inner hole 251 of the outer ferrule 25 and the inner ferrule 26 is inserted into the inner hole 421 of the braided wire 42 so that the terminal of the braided wire 42 is interposed between the outer ferrule 25 and the inner ferrule 26.

Next, in a state in which a core 63 is inserted into the inner ferrule 26, upper and lower molds 61 and 62 approach to each other to press the outer ferrule 25. Accordingly, the outer ferrule 25 is caulked (pressingly engaged) inwardly so that the braided wire 42 and two ferrules 25 and 26 are crimped.

By the pressing of the molds 61 and 62, as illustrated in Fig. 7(b), the outer ferrule 25 is recessed so as to follow the first groove 264 of the inner ferrule 26 (reference numeral 252 in Fig. 7(b)).

At this time, the first groove 264 is formed along the axial direction of the inner ferrule 26 so that a surplus length of the outer ferrule 25 caused by caulking is absorbed by the recess 252. Therefore, a protruded portion is not formed on the outer circumference of the outer ferrule 25 so that the size of the terminal structure of the braided wire may be reduced.

Further, if the protruded portion is formed on the outer circumference of the outer ferrule 25, the braided wire is caught by the protruded portion during the operation to be damaged so that the shield performance may be lowered.

In contrast, in this embodiment, the protruded portion is not formed on the outer circumference of the outer ferrule 25 so that the braided wire is not damaged by the catching.

Further, in this embodiment, by the pressing of the molds 61 and 62, as illustrated in Fig. 6(b), the outer ferrule 25 is recessed so as to follow the second groove 265 of the inner ferrule 26.

At this time, the second groove 265 is formed along the circumferential direction of the inner ferrule 26 so that a tensile strength of a crimping portion of the inner ferrule 26, the braided wire 42, and the outer ferrule 25 is improved.

If the outer ferrule 25 is transformed along the first groove 264, a portion in the outer ferrule 25 which is opposite to a space between the first grooves 264 expands to be a drum shape, and the inner ferrule 26, the braided wire 42 and the outer ferrule 25 are not in contact with each other at this portion.

In contrast, in this embodiment, even if the outer ferrule 25 expands to have a drum shape, the inner ferrule 26, the braided wire 42 and the outer ferrule 25 are in contact with each other by the protruded portion 266 and a contact resistance between the inner ferrule 26, the braided wire 42 and the outer ferrule 25 is lowered so that the shield performance may be improved.

Further, a contacting area of the inner ferrule 26, the braided wire 42 and the outer ferrule 25 is increased by the protruded portion 266, and thus the tensile strength of the crimping portion of the inner ferrule 26, the braided wire 42 and the outer ferrule 25 is also improved.

Next, as illustrated in Fig. 6(c), the electric wire 41 to which the terminal 20 is attached is inserted into the braided wire 42.

Meanwhile, as illustrated in Fig. 6(d), the housing seal 313 is inserted into the fitting groove 321 of the housing 30, and the housing seal 313 is installed to the periphery of the housing portion 31. Next, as illustrated in Fig. 6(e), the shield plate 332 is inserted into the insertion space 331 of the housing 30. Next, as illustrated in Fig. 6(f), the collar 35 and the bolt 36 are inserted into the through hole 341 of the convex portion 34 of the housing 30 and the bolt 36 is further fixed by the E ring 37.

Next, as illustrated in Fig. 6(g), the terminal 20 is inserted into the housing hole 311 of the housing 30, and the outer ferrule 25, the braided wire 42 and the inner ferrule 26 are inserted into the insertion space 331 of the housing 30.

Next, although not specifically illustrated, by installing the rear cover 38 to the housing 30 so as to cover the outer wall portion 33 of the housing 30 and the braided wire 42, the connector 10 is completed.

The inner ferrule 26 in this embodiment corresponds to an example of the inner circular body in the invention, and the outer ferrule 25 in this embodiment corresponds to an example of the outer circular body in the invention.

The embodiments described above have been described for easy understanding of the present invention and not for purposes of limitation of the present invention. Thus, each element disclosed in the above-described embodiments is with intent to include all changes in the design and equivalents thereof belonging to the technical scope of the present invention.

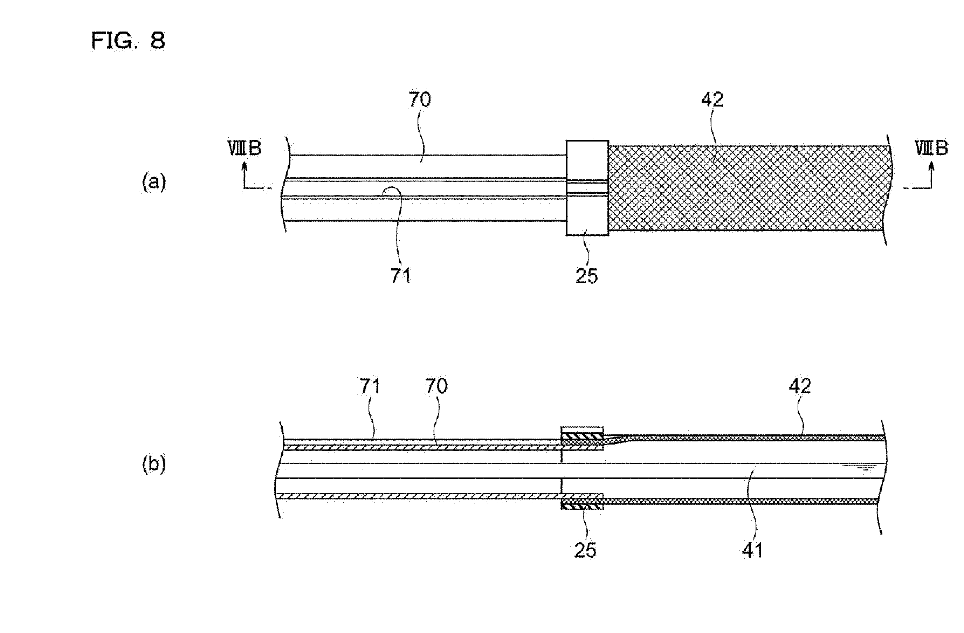

Figs. 8(a) and 8(b) are a plan view and a cross-section view illustrating the terminal structure of the braided wire according to another embodiment of the invention, respectively.

For example, as illustrated in Figs. 8(a) and 8(b), instead of the inner ferrule 26, a metal pipe 70 which electromagnetically shields the electric wire 41 is inserted into the terminal of the braided wire 42, the outer ferrule 25 is positioned on the outer circumference of the portion which is overlaid with the pipe 70 in the braided wire 42, and the outer ferrule 25 is caulked so that the pipe 70, the braided wire 42, and the outer ferrule 25 may be crimped.

Also in this case, a concave-shaped groove 71 is formed in the pipe 70 along the axial direction so that the surplus length of the outer ferrule 25 caused by caulking is absorbed by the recess. As a result, the size of the terminal structure of the braided wire may be reduced and the braided wire may be prevented from being broken.

Further, although not specifically illustrated, by further forming the concave-shaped groove in the pipe 70 along the circumferential direction, the tensile strength of the crimping portion may be improved.

In this case, the pipe 70 corresponds to an example of the inner circular body in the invention, and the outer ferrule 25 corresponds to an example of the outer circular body in the invention.

### EXPLANATIONS OF LETTERS OR NUMERALS

- 10: CONNECTOR
- 20: TERMINAL
- 25: OUTER FERRULE
- 251: INNER HOLE
- 252: RECESS
- 26: INNER FERRULE
- 261: OUTER CIRCUMFERENCE SURFACE
- 262: TOP SURFACE
- 263: BOTTOM SURFACE
- 264: FIRST GROOVE
- 265: SECOND GROOVE
- 266: PROTRUDED PORTION
- 30: HOUSING
- 31: HOUSING PORTION
- 32: CYLINDER PORTION
- 33: OUTER WALL PORTION
- 331: INSERTION SPACE
- 332: SHIELD PLATE
- 34: CONVEX PORTION
- 40: ELECTRIC POWER CABLE
- 41: ELECTRIC WIRE
- 42: BRAIDED WIRE
- 421: INNER HOLE

## Claims

1. A terminal structure of a braided wire in which a terminal of the braided wire is interposed between an inner circular body and an outer circular body and the outer circular body is caulked inwardly, the terminal structure **characterized in that**
the inner circular body includes at least one first groove along an axial direction of the inner circular body, and
the outer circular body is recessed along the first groove of the inner circular body.

2. The terminal structure of the braided wire according to claim 1, **characterized in that**
the inner circular body includes a second groove along a circumferential direction of the inner circular body, and
the outer circular body is recessed along the second groove of the inner circular body.

3. The terminal structure of the braided wire according to claim 1 or 2, **characterized in that**
the inner circular body has a protruded portion disposed between a plurality of the first grooves.

4. A terminal processing method for a braided wire, the method **characterized by** comprising:
a first step of interposing a terminal of the braided wire between an inner circular body and an outer circular body; and
a second step of caulking the outer circular body inwardly,
wherein the inner circular body includes at least one first groove along an axial direction of the inner circular body, and
the second step includes recessing the outer circular body along the first groove of the inner circular body.

5. The terminal processing method for the braided wire according to claim 4, **characterized in that**
the inner circular body includes a second groove along a circumferential direction of the inner circular body, and
the second step includes recessing the outer circular body along the second groove of the inner circular body.

6. The terminal processing method for the braided wire according to claim 4 or 5, **characterized in that**
the inner circular body has a protruded portion disposed between a plurality of the first grooves, and
the second step includes causing the protruded portion to bring into contact with the braided wire.
